# EUROPÄISCHE PATENTSCHRIFT

(11) **EP 2 697 542 B1**
(45) Veröffentlichungstag und Bekanntmachung des Hinweises auf die Patenterteilung: **16.11.2016**
(21) Anmeldenummer: 12732809.4
(22) Anmeldetag: 20.06.2012
(51) Int. Cl.: F16J 15/10, F16J 15/12, F16J 15/32, H02B 1/044

(54) **BEFEHLS- UND MELDEVORRICHTUNG**
COMMAND AND ALERT DEVICE
DISPOSITIF DE COMMANDE ET DE SIGNALISATION

(30) Priorität: 05.07.2011 DE 102011078638
(43) Veröffentlichungstag der Anmeldung: 19.02.2014
(73) Patentinhaber: Siemens Aktiengesellschaft, 80333 München (DE)
(72) Erfinder: BÄUML, Alfred, 92421 Schwandorf (DE); BAUMANN, Michael, 92546 Schmidgaden (DE); RISS, Patricia, 92272 Freudenberg (DE)
(86) Internationale Anmeldenummer: PCT/EP2012/061866
(87) Internationale Veröffentlichungsnummer: WO 2013/004502

(56) Entgegenhaltungen:
- EP-A1- 1 025 987
- EP-A1- 1 052 748
- EP-A1- 1 811 210
- WO-A1-2007/096664
- DE-A1- 2 332 490
- DE-A1- 19 833 093
- DE-U1- 9 113 754
- GB-A- 2 199 623

## Beschreibung

Die Erfindung betrifft eine Befehls- und Meldevorrichtung, die einen Betätiger mit einem rohrförmigen Körper aufweist, wobei der rohrförmige Körper durch eine Frontplatte geführt ist und zwischen rohrförmigem Körper und Frontplatte eine Dichtung angeordnet ist.

Eine derartige Befehls- und Meldevorrichtung kommt bei Maschinen oder elektrischen Anlagen zum Einsatz, die über Befehlsgeräte, wie zum Beispiel Drucktaster, Wahlschalter usw., die auf die Steuerung einwirken, bedient werden. Diese Befehlsgeräte werden in Schalttafeln, Bedientableaus, Schaltschranktüren oder Gehäusedeckeln montiert. Befehlsgeräte sind in der Regel modular aufgebaut. Das bedeutet, sie bestehen aus einem Betätiger, einem Befestigungsteil wie zum Beispiel einer Ringmutter, oder einem speziellen Montagehalter und einem oder mehreren Schaltelementen, die als Öffner- oder Schließerschaltglieder ausgeführt sind. Zur Montage wird der Betätiger in der Regel von vorn durch eine Öffnung in der Schalttafel geführt und von hinten mittels eines Befestigungsteils montiert. Die Schaltelemente werden mit Schrauben, Schnapphaken oder Riegel mechanisch am Betätiger oder am Befestigungsteil fixiert. Die elektrische Verbindung der Schaltelemente mit der Steuerung erfolgt über Anschlussklemmen.

Bei Sicherheitsanwendungen wie zum Beispiel Not-Halt-Befehlsgeräten, ist es Vorschrift, dass das Signal durch das Öffnen von zwangsöffnenden Kontakten erzeugt wird. Das heißt, dass bei einem unbetätigten Not-Halt-Befehlsgerät die Kontakte und damit der zugehörige Stromkreis geschlossen sind. Im Störungs- oder Notfall wird durch Schlagen auf den Not-Halt-Betätiger, der sich vor der Schalttafel befindet, der Öffnerkontakt unterbrochen und die Anlage oder Maschine in einen sicheren Zustand versetzt. Dies funktioniert jedoch nur, wenn die räumliche Zuordnung zwischen Betätiger und Schaltelement sichergestellt ist. Durch mangelhafte Montage oder durch Gewalteinwirkung kann es vorkommen, dass die Schaltelemente mechanisch vom Betätiger getrennt werden. In diesem Fall ist das Not-Halt-Befehlsgerät nicht mehr funktionsfähig, das heißt, bei einer Betätigung im Notfall werden die Kontakte nicht geöffnet, und damit erfolgt auch keine Beseitigung des Gefahrenzustands. Dies kann zu fatalen Schäden für Mensch und Maschine führen. Daher kommt der sicheren Verbindung zwischen Betätiger und Schaltelement eine wesentliche Bedeutung zu.

Betätiger müssen vielschichtigen Anforderungen gerecht werden. So sollten sie sich zum Beispiel einfach montieren lassen und für den Kunden eine gewisse Attraktivität aufweisen. Die wichtigste Anforderung jedoch ist, die Anlagen zu schalten oder in den sicheren Zustand zu versetzen und dies auch an Orten, die allen möglichen Umwelteinflüssen ausgesetzt sind. Dafür stellt die entsprechende Schutzart die Dichtungsanforderung an diese Produktgruppe dar, um die anhaltende Betriebsfähigkeit der Geräte zu gewährleisten. Um diesen Zustand zu erreichen, sind verschiedene Dichtungskonzepte auf dem Markt.

Zur Abdichtung der Betätiger gegenüber der Frontplatte und zur Vorfixierung in der Frontplatte wurden bisher auf alle Betätiger Dichtungen fest montiert oder in anderer Form fest angebracht, zum Beispiel durch ein Zweikomponentenspritzgußverfahren, d. h., die Dichtung wurde direkt auf den rohrförmigen Körper aufgebracht.

Der Nachteil der bisher aus dem Stand der Technik bekannten Lösungen besteht darin, dass die technischen und konstruktiven Gestaltungsmöglichkeiten erheblich eingeschränkt sind.

Dazu geht aus der EP 1 052 748 A1 eine Befehls- und Meldevorrichtung hervor, die einen Betätiger mit einem rohrförmigen Körper aufweist, wobei der rohrförmige Körper durch eine Frontplatte geführt ist und zwischen rohrförmigem Körper und Frontplatte eine Dichtung angeordnet ist.

Aus der EP 1 025 987 A1 geht eine Dichtung hervor, die gegen aggressive Medien in der Industrie beständig ist.

Demgemäß besteht die Aufgabe der vorliegenden Erfindung darin, eine Befehls- und Meldevorrichtung zu schaffen, die hinsichtlich der Dichtwirkung zwischen Frontplatte und Betätiger ein anspruchsvolles Anforderungsprofil erfüllt und dabei eine Mehrzahl an konstruktiven Gestaltungsmöglichkeiten ermöglicht.

Diese Aufgabe wird durch eine Befehls- und Meldevorrichtung mit den Merkmalen des Patentanspruchs 1. Vorteilhafte Ausund Weiterbildungen, welche einzeln oder in Kombination miteinander eingesetzt werden können, sind der Gegenstand der abhängigen Ansprüche.

Erfindungsgemäß wird diese Aufgabe durch eine Befehls- und Meldevorrichtung gelöst, die einen Betätiger mit einem rohrförmigen Körper aufweist, wobei der rohrförmige Körper durch eine Frontplatte geführt ist und zwischen rohrförmigem Körper und Frontplatte eine Dichtung angeordnet ist. Die Erfindung zeichnet sich dabei dadurch aus, dass die Dichtung ein aus mehreren Komponenten ausgebildetes Dichtungselement ist. Das Dichtungselement, vorzugsweise ein Dichtring ist dabei vorzugsweise einstückig ausgebildet und nicht fest, sondern lösbar auf den rohrförmigen Körper, der auch als Rosette bezeichnet wird, beziehungsweise auf die Frontplatte aufgesteckt. Das erfindungsgemäße Dichtungselement dient sowohl der Dichtung als auch der Fixierung und kann in einer Einhandmontage montiert werden.

Das erfindungsgemäße Dichtungselement ist vorzugsweise als Dichtungsring ausgeführt. Das Dichtungselement umfasst einen Dichtungsbereich, der auf der Frontplatte aufliegt, sowie einen Klemmbereich, der zwischen der Außenwand des rohrförmigen Körpers und der Frontplatte angeordnet ist. Der Klemmbereich weist vorzugsweise mindestens eine Hartkomponente sowie mindestens eine Weichkomponente auf, die in Form von Weichelementen entweder haftend oder klebend an definierten Positionen auf der Hartkomponente angeordnet ist. Die Weichelemente dienen als Überschneidungsstellen am Umfang des als Dichtungsringes ausgeführten Dichtungselementes. Die vorzugsweise vier Überschneidungsstellen dienen als Orientierung für das Zubehör. Vorzugsweise kann im Bereich dieser Weichelemente auch ein die Montagerichtung vorgebendes Strukturelement ausgebildet sein, das insbesondere pfeilförmig ausgeführt sein kann und mit einer Farbe zur besseren Wahrnehmung gefärbt sein kann. Das Strukturelement kann mit einem Hinterschnitt aus der Hartkomponente hinterschnitten sein, der gleichzeitig sowohl als Haftfläche auf dem rohrförmigen Körper des Betätigers dient als auch als Erhöhung für eine orientierte Montage am rohrförmigen Körper. Innerhalb der Hartkomponente kann zudem ein als U-förmiger Bereich ausgebildetes Dehnelement vorgesehen sein, das bei der Montage eine Aufdehnung über einen größeren Durchmesser, als er im montierten Zustand vorliegt, ermöglicht.

Am rohrförmigen Körper kann ein Absatz ausgebildet sein, der als Querschnittserweiterung dient. Die Erfindung sieht vor, den Übergangsbereich von der Frontplatte zur Frontplattendichtung beziehungsweise zur Rosette im Kegelverhältnis zu gestalten, damit die Frontplattenbohrungstoleranzen ausgeglichen werden, wobei hier sowohl eine positive als auch eine negative Kegelform denkbar ist.

Das erfindungsgemäße Dichtungselement bietet einen Toleranzausgleich in der Frontplatte über eine schiefe Ebene, wobei die flexiblen Weichkomponentenanteile die Dichtung und die verwendete Hartkomponente die Widerstandsfähigkeit gegen Umwelteinflüsse verbessert. Dieses Zweikomponentendichtungselement weist zudem durch die mögliche Einhandmontage deutlich verbesserte Montageeigenschaften auf und stellt eine technische Kombination aus Dichtung und Fixierung dar.

Das erfindungsgemäße Dichtungselement erfüllt insbesondere das Anforderungsprofil der Schutzart IP69K sowie andere Schutzarten mit geringeren Anforderungen. Diese Schutzart gibt die Eignung von elektrischen Betriebsmitteln, wie zum Beispiel Geräten, Leuchten und Installationsmaterial für verschiedene Umgebungsbedingungen an, sowie den Schutz von Menschen gegen die potentielle Gefährdung bei deren Benutzung. Bei vielen Anwendungen müssen elektrische und elektronische Geräte unter erschwerten Umweltbedingungen über viele Jahre sicher arbeiten. Außer dem zulässigen Temperaturbereich stellt die chemische Belastung, hierunter wird die Beständigkeit gegen aggressive Medien in der Industrie wie Dämpfe, Säuren, Laugen, Öl oder Kraftstoffe verstanden, eine Einsatzbeschränkung dar. Zudem muss das Eindringen von Nässe und Fremdkörpern, wie zum Beispiel Staub, für eine zuverlässige Funktion verhindert werden.

Bezüglich ihrer Eignung für verschiedene Umgebungsbedingungen werden die Systeme in entsprechende Schutzarten, so genannten IP-Codes eingeteilt. Die Abkürzung "IP" steht laut DIN für "International Protection", wird aber im englischen Sprachraum als "Ingress Protection" (Eindringschutz) verwendet. Den in der Schutzartbezeichnung immer vorhandenen Buchstaben "IP" werden zwei Kennziffern angehängt. Diese zeigen an, welchen Schutzumfang ein Gehäuse bezüglich Berührung, beziehungsweise Fremdkörper (erste Kennziffer) und Feuchtigkeit, beziehungsweise Wasser (zweite Kennziffer), bietet. Die hier vorliegende Schutzart IP69K zeigt gemäß der Ziffer "6" an, dass das Gerät staubdicht sein soll und gemäß der Ziffer "9K" Schutz gegen Wasser bei Hochdruck- und Dampfstrahlreinigung bieten soll.

Das hier vorgestellte Mehrkomponentendichtungselement zeichnet sich weiterhin dadurch aus, dass die Bohrungstoleranz in der Frontplatte weitestgehend ausgeglichen werden kann, wodurch ein idealer Selfsticking Effekt und somit eine ideale Klemmwirkung bzw. Vorfixierung entsteht. Außerdem verfügt das Dichtungselement durch die Mehrkomponentenzusammensetzung, wobei hier auch mehr als zwei Komponenten denkbar sind, über eine ausreichende Festigkeit, um die Montage sicher zu gewährleisten bzw. die Demontage zu erleichtern.

Das erfindungsgemäße Dichtungselement ist zwar einstückig ausgeformt, basiert aber vorzugsweise auf zwei oder mehreren Komponenten, wobei zumindest eine Weichkomponente und eine Hartkomponente als Bestandteile des Dichtungselementes vorgesehen sind. Erfindungsgemäß haftet die Weichkomponente, beispielsweise ein Elastomer auf der Hartkomponente oder ist auf ihr aufgeklebt.

Es ist in vorteilhafter Weise vorgesehen, dass die Weichkomponente in Form von definierten Weichelementen auf der Hartkomponente haftet, d.h., die Hartkomponente wird nicht komplett mit der Weichkomponente überzogen, sondern die Weichkomponente ist an bestimmten Stellen auf dem Umfang des als Dichtungsringes ausgebildeten Dichtungselementes ausgebildet. Diese definiert positionierten Weichelemente verhindern, dass sich das Dichtungselement verwindet bzw. nach hinten verschiebt. Zudem bieten sie eine größere Überscheidung zwischen der Fronttafelbohrung und dem auf dem rohrförmigen Körper aufgesteckten Dichtungselement, so dass höhere Montagekräfte möglich sind.

In einem besonders vorteilhaften Ausführungsbeispiel ist vorgesehen, dass die definiert positionierte Weichkomponente einen Hinterschnitt aus einer Hartkomponente aufweist. Auch diese technische Ausführung führt dazu, dass sich das Dichtungselement nicht verwindet bzw. nach hinten verschiebt.

In einem weiteren besonders vorteilhaften Ausführungsbeispiel ist vorgesehen, dass die Hartkomponenten mindestens ein definiertes Dehnelement aufweisen. Dieses Dehnelement kann beispielsweise als U-förmiger Bereich ausgebildet sein, der bei der Montage eine Aufdehnung über einen größeren Durchmesser, als er im montierten Zustand vorliegt, ermöglicht. Eine andere Ausführungsform für das Dehnelement sieht vorzugsweise vor, das Dehnelement als geschlossenen Ring mit Sollbruchstelle in der Hartkomponente auszubilden. Mit Hilfe der Dehnelemente kann der Durchmesser in der Hartkomponente vergrößert werden, so dass bei der Montage eine Aufdehnung über den üblichen Durchmesser hinaus möglich ist, der sich im montierten Zustand jedoch wieder dem kleineren Durchmesser anpasst. In vorteilhafter Weise ist außerdem in einem besonderen Ausführungsbeispiel vorgesehen, dass am Dichtungselement ein die Montagerichtung vorgebendes Strukturelement ausgebildet ist. Dieses Strukturelement ist vorzugsweise pfeilförmig ausgebildet und kann farblich hervorgehoben sein, indem sowohl der Hartkomponente als auch der Weichkomponente eine bestimmte Farbe zugewiesen wird. Die Vorgabe der Montagerichtung am elektromechanischen Schaltgerät erleichtert dem Endkunden den Zusammenbau des Gerätes.

Das hier vorgestellte Mehrkomponentendichtungselement zeichnet sich weiterhin dadurch aus, dass die Bohrungstoleranz in der Frontplatte weitestgehend ausgeglichen werden kann, wodurch ein idealer Selfsticking Effekt und somit eine ideale Klemmwirkung bzw. Vorfixierung entsteht. Außerdem verfügt das Dichtungselement durch die Mehrkomponentenzusammensetzung, wobei hier auch mehr als zwei Komponenten denkbar sind, über eine ausreichende Festigkeit, um die Montage sicher zu gewährleisten bzw. die Demontage zu erleichtern.

Weitere Vorteile und Ausführungen der Erfindung werden nachfolgend anhand von Ausführungsbeispielen sowie anhand der Zeichnung erläutert.

Dabei zeigen schematisch:
Fig. 1 in einer perspektivischen Darstellung eine erfindungsgemäße Befehls- und Meldevorrichtung mit einem in einer Frontplatte vormontierten Dichtungselement;
Fig. 2 in einer perspektivischen Darstellung ein Ausführungsbeispiel eines erfindungsgemäßen Dichtungselement mit U-förmigen Bereich als Dehnelement;
Fig. 3 in einer perspektivischen Darstellung ein Ausführungsbeispiel eines rohrförmigen Körpers eines Betätigers;
Fig. 4 in einer perspektivischen Darstellung ein weiteres Ausführungsbeispiel eines erfindungsgemäßen Dichtungselement mit Sollbruchstelle als Dehnelement in der Außenansicht;
Fig. 5 in einer perspektivischen Darstellung das Ausführungsbeispiel nach Fig. 4 in der Innenansicht;
Fig. 6 in einer perspektivischen Darstellung ein Ausführungsbeispiel eines rohrförmigen Körpers eines Betätigers mit aufgestecktem Dichtungselement;
Fig. 7 in einer Schnittdarstellung ein Ausschnitt eines erfindungsgemäßen Dichtungselement aufgesteckt auf einem rohrförmigen Körper mit Hinterschnitt;
Fig. 8 in einer Schnittdarstellung das erfindungsgemäße Dichtungselement mit Hart- und Weichkomponente angeordnet zwischen Betätiger und Fronttafel;
Fig. 9 in einer perspektivischen Darstellung ein weiteres Ausführungsbeispiel eines erfindungsgemäßen Dichtungselementes mit Schutzring.

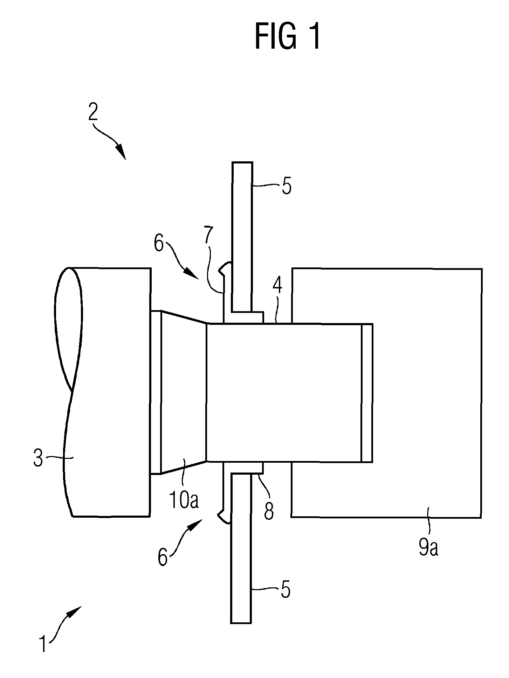

Fig. 1 zeigt eine erfindungsgemäße Befehls- und Meldevorrichtung 1 mit einem Betätiger 2, der einen Druckknopf 3 und einen rohrförmigen Körper 4 aufweist. Der Betätiger 2 ist über den rohrförmigen Körper 4 in eine Frontplatte 5 eingeführt, wobei zwischen der Frontplatte 5 und der Außenwand des rohrförmigen Körpers 4 ein Dichtungselement 6 angeordnet ist. Das Dichtungselement 6 ist eine Mehrkomponentendichtung und weist vorzugsweise zwei Komponenten, eine Weichkomponente und eine Hartkomponente, auf. Das Dichtungselement 6 umfasst einen Dichtungsbereich 7, der auf der Frontplatte 5 aufliegt, sowie einen Klemmbereich 8, der zwischen der Außenwand der Rosette und der Frontplatte 5 angeordnet ist.

Das erfindungsgemäße Dichtungselement 6 gestaltet den Übergangsbereich von Frontplatte 5 zur Frontplattendichtung beziehungsweise zum rohrförmigen Körper 4 im Kegelverhältnis, damit die Frontplattenbohrungstoleranzen ausgeglichen werden.

Das erfindungsgemäße Dichtungselement 6 kann in einem ersten Schritt in die Frontplatte 5 montiert werden, wodurch ein deutlich höherer Dichtungsschutz und damit auch beispielsweise die Dichtigkeit der Schutzart IP69K erreicht wird. Zusätzlich ergibt sich aus der vorgezogenen Dichtungsmontage in die Frontplatte 5 eine erhebliche Gestaltungsfreiheit für die Dichtungsgeometrie.

Alternativ kann jedoch weiterhin die Vormontage des Dichtungselementes 6 auch auf einen Durchmesser reduzierten Bereich des rohrförmigen Körpers 4 erfolgen, die die gewohnte Montage des Betätigers 2 mit montierter Dichtung in die Frontplatte 5 realisiert. Zudem ist als weiterer Vorteil zu nennen, dass der Selfsticking Effekt durch das Kegelverhältnis am rohrförmigen Körper 4 und dem erfindungsgemäßen Dichtungselement 6 deutlich verstärkt wird.

Der Betätiger 2 ist in seiner Position durch einen Halter 9a, der auf der gegenüberliegenden Seite zum Betätiger 2 an der Frontplatte 5 angeordnet ist, fixiert. Vorzugsweise kann der rohrförmige Körper 4 des Betätigers 2 direkt unter dem Druckknopf 3 einen Absatz 10a aufweisen, der als Querschnittserweiterung in Richtung des Druckknopfes 3 ausgebildet ist.

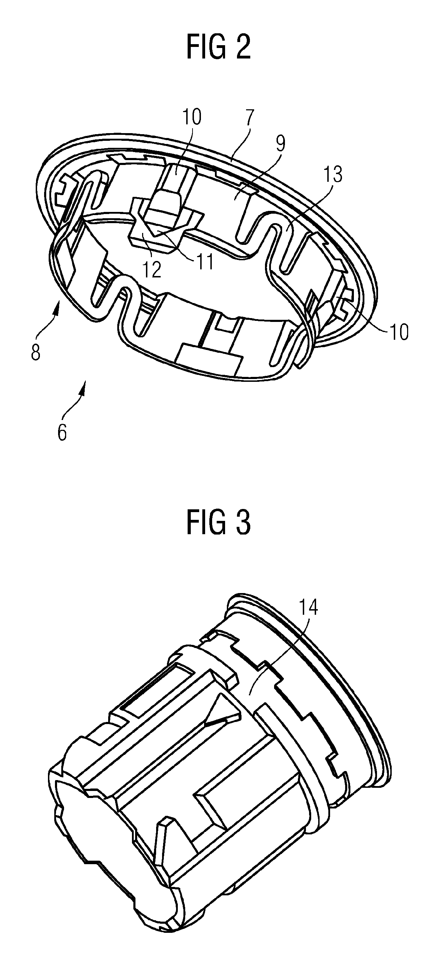

Fig. 2 zeigt ein Ausführungsbeispiel eines erfindungsgemäßen Dichtungselementes 6, das vorzugsweise als Dichtungsring ausgeführt ist. Das Dichtungselement 6 umfasst den Dichtungsbereich 7, der auf der Frontplatte 5 aufliegt, sowie den Klemmbereich 8, der zwischen der Außenwand des rohrförmigen Körpers 4 und der Frontplatte 5 angeordnet ist. Der Klemmbereich 8 weist vorzugsweise mindestens eine Hartkomponente 9 sowie mindestens eine Weichkomponente auf, die in Form von Weichelementen 10 entweder haftend oder klebend an definierten Positionen auf der Hartkomponente 9 angeordnet ist. Die Weichelemente 10 dienen als Überschneidungsstellen am Umfang des als Dichtungsringes ausgeführten Dichtungselementes 6. Die vorzugsweise vier Überschneidungsstellen dienen als Orientierung für das Zubehör. Vorzugsweise kann im Bereich dieser Weichelemente 10 auch ein die Montagerichtung vorgebendes Strukturelement 11 ausgebildet sein, das insbesondere pfeilförmig ausgeführt sein kann und mit einer Farbe zur besseren Wahrnehmung gefärbt sein kann. Das Strukturelement 11 kann mit einem Hinterschnitt 12 aus der Hartkomponente 9 hinterschnitten sein, der gleichzeitig sowohl als Haftfläche auf dem rohrförmigen Körper 4 des Betätigers 2 dient als auch als Erhöhung für eine orientierte Montage am rohrförmigen Körper 4. Innerhalb der Hartkomponente 9 kann zudem ein als U-förmiger Bereich ausgebildetes Dehnelement 13 vorgesehen sein, das bei der Montage eine Aufdehnung über einen größeren Durchmesser, als er im montierten Zustand vorliegt, ermöglicht.

In Fig. 3 ist ein Ausführungsbeispiel eines rohrförmigen Körpers 4 eines Betätigers 2 dargestellt mit einer speziellen Aussparung 14. In diese Aussparung 14 greift das Dichtungselement 6 aus Fig. 2 mit dem Hinterschnitt 12 ein, wobei durch die Erhöhung das Dichtungselement 6 von einem Montagegreifer orientiert aufgenommen werden kann und auch orientiert auf dem Betätiger 2 montiert werden kann.

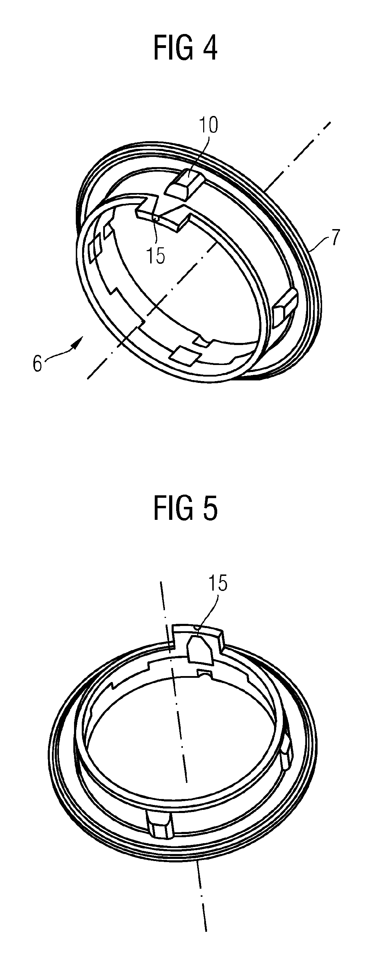

Fig. 4 zeigt ein weiteres Ausführungsbeispiel eines erfindungsgemäßen Dichtungselementes 6 mit einer Sollbruchstelle 15 als Dehnelement, wobei der Hinterschnitt hier durch die Weichkomponente des Dichtungselementes 6 am rohrförmigen Körper 4 erzeugt wird. Für die Montage wird erfindungsgemäß ein geschlossener Ring aus der Hartkomponente 9 bei der Montage auf den Betätiger 2 an der Sollbruchstelle 15 aufgebrochen. Damit kann das Dichtungselement 6 über einen größeren Durchmesser geschoben werden. Der aufgebrochene Ring wird an der Aussparung 14 des rohrförmigen Körpers 4 wieder geschlossen gehalten. Als Variante zu diesem Ausführungsbeispiel wäre es auch denkbar, den geschlossenen Ring in einem Teilbereich auszustanzen.

In Fig. 5 ist das Ausführungsbeispiel nach Fig. 4 in einer Innenansicht des Dichtungselementes 6 mit Sollbruchstelle 15 gezeigt.

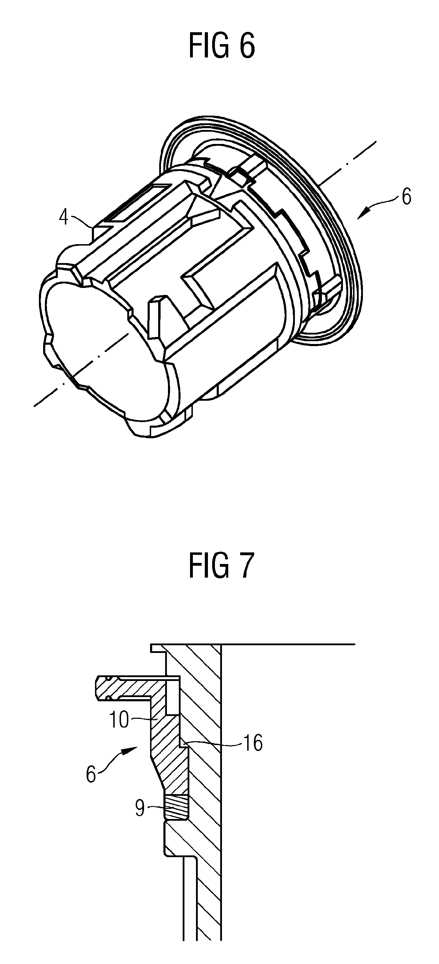

Fig. 6 zeigt ein Ausführungsbeispiel eines rohrförmigen Körpers 4 eines Betätigers 2 mit aufgestecktem Dichtungselement 6 in der Variante mit Sollbruchstelle 15.

Fig. 7 zeigt einen Ausschnitt eines erfindungsgemäßen Dichtungselementes 6 aufgesteckt auf einem rohrförmigen Körper 4, der einen Hinterschnitt 16 aufweist.

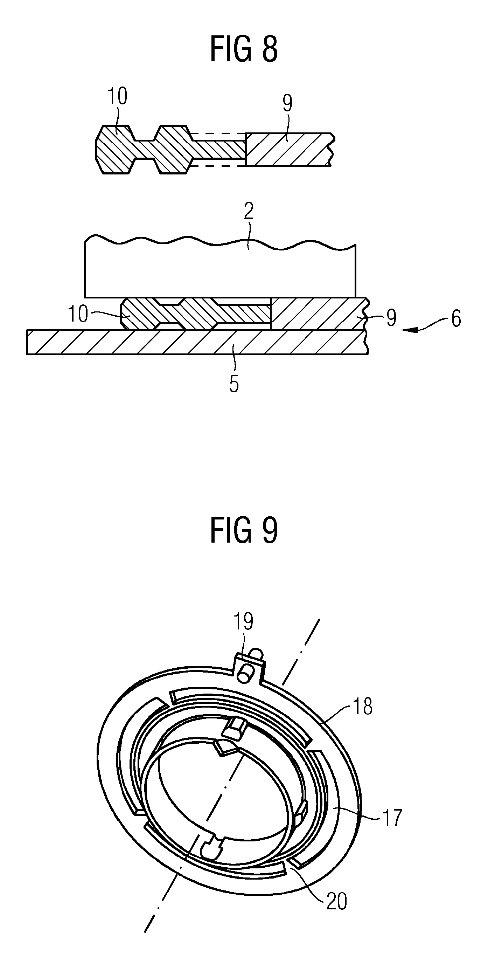

In Fig. 8 ist das erfindungsgemäße Dichtungselement 6 mit Hartkomponente 9 und Weichelementen 10 dargestellt, das zwischen Betätiger 2 und Fronttafel 5 angeordnet ist. Das Dichtungselement 6 ermöglicht einen definierten Abstand zwischen Betätiger 2 und Fronttafel 5, der durch die Hartkomponente 9 hergestellt wird. Auf diese Art wird das Dichtungselement 6 immer auf eine bestimmte Pressung zusammengedrückt. Der Vorteil besteht darin, dass der Betätiger 2 über den Halter 9a an die Fronttafel 5 gepresst wird. Über die Lebensdauer ändert sich die Anpresskraft zwischen Betätiger 2 und Fronttafel 5 nicht, da die Hartkomponente 9 nicht "fließt". Ohne die Hartkomponente 9 "fließt" die Weichkomponente und die Anpresskraft verringert sich.

Fig.9 zeigt ein erfindungsgemäßes Dichtungselement 6 mit Schutzring 17, der zusammen mit einem äußeren Montagering 18 für den Greifvorgang am Dichtungselement 6 angegossen ist. Am äußeren Montagering 18 ist zudem eine Montagehilfe 19 angeordnet, die den Fertigungs- und Montageprozess erleichtert. Für das Dichtungselement 6 gibt es eine IP69K Anforderung, d.h., ein heißer Wasserstrahl wird auf das Dichtungselement 6 beaufschlagt. Der Schutzring 17 dient dabei als Schutzschild für den Wasserstrahl. Der äußere Montagering 18 ist über Materialübergänge 20 am Schutzring 17 angeordnet, die durch Wegstanzen aufgebrochen werden können.

Die Erfindung zeichnet sich dadurch aus, dass das einfindungsgemäße Mehrkomponentendichtungselement die Bohrungstoleranz in der Frontplatte vollständig ausgleicht und zudem einen idealen Selfsticking Effekt bietet. Zudem weist das Dichtungselement durch die Mehrkomponentenzusammensetzung eine ausreichende Festigkeit auf, um die Montage sicher zu gewährleisten bzw. die Demontage zu erleichtern.

## Patentansprüche

1. Befehls und Meldevorrichtung aufweisend einen Betätiger, eine Dichtung mit einem Dichtungsbereich und einem Klemmbereich und einer Frontplatte, wobei die Befehls- und Meldevorrichtung (1) einen Betätiger (2) mit einem rohrförmigen Körper (4) aufweist, wobei der rohrförmige Körper (4) durch die Frontplatte (5) geführt ist und zwischen rohrförmigem Körper (4) und Frontplatte (5) die Dichtung angeordnet ist, wobei die Dichtung einen Dichtungsbereich umfasst, der auf der Frontplatte (5) aufliegt, sowie einen Klemmbereich, der zwischen der Außenwand des rohrförmigen Körpers (4) und der Frontplatte (5) angeordnet ist, **dadurch gekennzeichnet, dass** die Dichtung ein aus mehreren Komponenten ausgebildetes Dichtungselement (6) ist, wobei der Klemmbereich des Dichtungselements (6) mindestens eine Weichkomponente und mindestens eine Hartkomponente (9) aufweist, wobei die Hartkomponente (9) mindestens ein definiertes Dehnelement (13, 15) aufweist, wobei mit Hilfe der Dehnelemente (13, 15) der Durchmesser in der Hartkomponente vergrößert werden kann, so dass bei der Montage eine Aufdehnung über den üblichen Durchmesser hinaus möglich ist, der sich im montierten Zustand jedoch wieder dem kleineren Durchmesser anpasst.

2. Befehls- und Meldevorrichtung (1) nach Anspruch 1, **dadurch gekennzeichnet, dass** das Dichtungselement (6) als Dichtungsring ausgebildet ist.

3. Befehls- und Meldevorrichtung (1) nach einem der vorhergehenden Ansprüche, **dadurch gekennzeichnet, dass** die Weichkomponente in Form von definierten Weichelementen (10) auf der Hartkomponente (9) angeordnet ist.

4. Befehls- und Meldevorrichtung (1) nach einem der vorhergehenden Ansprüche, **dadurch gekennzeichnet, dass** die Weichelemente (10) einen Hinterschnitt (12) aus einer Hartkomponente (9) aufweisen.

5. Befehls- und Meldevorrichtung (1) nach Anspruch 1, **dadurch gekennzeichnet, dass** das Dehnelement (13) als U-förmiger Bereich ausgebildet ist.

6. Befehls- und Meldevorrichtung (1) nach Anspruch 1, **dadurch gekennzeichnet, dass** das Dehnelement (15) als Sollbruchstelle (15) innerhalb der Hartkomponente (9) ausgebildet ist.

## Claims

1. Command and alert device having an actuator, having a seal with a sealing region and with a clamping region and with a front plate, wherein the command and alert device (1) has an actuator (2) with a tubular body (4), wherein the tubular body (4) is guided through the front plate (5) and the seal is arranged between the tubular body (4) and front plate (5), wherein the seal comprises a sealing region, which rests on the front plate (5), and having a clamping region, which is arranged between the outer wall of the tubular body (4) and the front plate (5), **characterized in that** the seal is a sealing element (6) formed from a plurality of components, wherein the clamping region of the sealing element (6) has at least one soft component and at least one hard component (9), wherein the hard component (9) has at least one defined expansion element (13, 15), wherein the expansion elements (13, 15) make it possible to increase the diameter in the hard component, and therefore, for installation purposes, it is possible to expand beyond the customary diameter, although the diameter adapts itself again, in the installed state, to the smaller diameter.

2. Command and alert device (1) according to Claim 1, **characterized in that** the sealing element (6) is designed as a sealing ring.

3. Command and alert device (1) according to one of the preceding claims, **characterized in that** the soft component is arranged in the form of defined soft elements (10) on the hard component (9).

4. Command and alert device (1) according to one of the preceding claims, **characterized in that** the soft elements (10) have an undercut (12) from a hard component (9).

5. Command and alert device (1) according to Claim 1, **characterized in that** the expansion element (13) is designed as a U-shaped region.

6. Command and alert device (1) according to Claim 1, **characterized in that** the expansion element (15) is designed as a predetermined breaking point (15) within the hard component (9).

## Revendications

1. Dispositif de commande et de signalisation comprenant un actionneur, un joint d'étanchéité comportant une zone d'étanchéité et une zone de serrage, et une plaque frontale, le dispositif de commande et de signalisation (1) comprenant un actionneur (2) doté d'un corps tubulaire (4), le corps tubulaire (4) passant à travers la plaque frontale (5) et le joint d'étanchéité étant agencé entre le corps tubulaire (4) et la plaque frontale (5), le joint d'étanchéité comprenant une zone d'étanchéité qui est appuyée contre la plaque frontale (5) et une zone de serrage qui est située entre la paroi extérieure du corps tubulaire (4) et la plaque frontale (5), **caractérisé en ce que** le joint d'étanchéité est un élément d'étanchéité (6) formé de plusieurs constituants, la zone de serrage de l'élément d'étanchéité (6) comprenant au moins un constituant tendre et au moins un constituant dur (9), le constituant dur (9) présentant au moins un élément d'extension défini (13, 15), le diamètre du constituant dur pouvant être agrandi à l'aide des éléments d'extension (13, 15) de manière à permettre, lors du montage, une extension au-delà du diamètre usuel, mais se réadaptant au diamètre plus petit à l'état monté.

2. Dispositif de commande et de signalisation (1) selon la revendication 1, **caractérisé en ce que** l'élément d'étanchéité (6) est exécuté en tant que bague d'étanchéité.

3. Dispositif de commande et de signalisation (1) selon l'une des revendications précédentes, **caractérisé en ce que** le constituant tendre se trouve sous forme d'éléments tendres définis (10) sur le constituant dur (9).

4. Dispositif de commande et de signalisation (1) selon l'une des revendications précédentes, **caractérisé en ce que** les éléments tendres (10) présentent une contre-dépouille (12) formée dans un constituant dur (9).

5. Dispositif de commande et de signalisation (1) selon la revendication 1, **caractérisé en ce que** l'élément d'extension (13) est exécuté en tant que zone en forme de U.

6. Dispositif de commande et de signalisation (1) selon la revendication 1, **caractérisé en ce que** l'élément d'extension (15) est exécuté en tant que point destiné à la rupture (15) à l'intérieur du constituant dur (9).
